Europäisches Patentamt

European Patent Office

Office européen des brevets

(11) Publication number: **0 181 195**
**B1**

(12) **EUROPEAN PATENT SPECIFICATION**

(45) Date of publication of patent specification: **16.01.91**

(21) Application number: **85308030.7**

(22) Date of filing: **05.11.85**

(51) Int. Cl.⁵: **B 01 D 3/32,** B 01 D 3/16,
F 16 L 49/00

(54) Method and apparatus for distributing the load between sections of a vertical column.

(30) Priority: **05.11.84 US 668588**

(43) Date of publication of application:
**14.05.86 Bulletin 86/20**

(45) Publication of the grant of the patent:
**16.01.91 Bulletin 91/03**

(84) Designated Contracting States:
**CH DE FR GB IT LI**

(56) References cited:
**CH-B- 239 430**
**DE-A-2 830 185**
**GB-A-2 010 434**
**US-A-2 181 196**

(73) Proprietor: **PFAUDLER COMPANY**
**1000 West Avenue P.O. Box 1600**
**Rochester, New York 14692 (US)**

(72) Inventor: **Nunlist, Erwin Joseph**
**1010 Penfield Road**
**Penfield New York 14623 (US)**

(74) Representative: **Fisher, Bernard et al**
**Raworth, Moss & Cook 36 Sydenham Road**
**Croydon Surrey CR0 2EF (GB)**

Courier Press, Leamington Spa, England.

# Description

The present invention relates to glass or enamel lined columns or towers. Glass lined metal, particularly ferrous metal, steel, columns comprised of a plurality of individual sections, are subject to leakage at the gasketed junction of the column sections. Such leakage is caused by failure of the gasket, usually by an overloading of the gasketed joint. The present invention seeks to minimise, or eliminate, such overloading by providing a load sharing, or load distributing means, around the junction of the column sections.

Glass lined columns have found widespread use in numerous industries, particularly in those industries which utilise extraction, separation or distillation processes. The glass lining facilitates the use of such columns under severe adverse temperature and corrosion conditions. Such columns may be operated at atmospheric pressure, under a vacuum, or at pressures up to and exceeding 690 KN/m² (100 psi). Columns are typically comprised of a plurality of individual column sections. The sections are incrementally assembled facilitating the placement and arrangement of trays within the column as it is being assembled. If the column is to be packed, the packing is suitably placed in each section as it is assembled. Typically, the column sections have flanged ends and are separated at the flange interface by a resilient gasket. The gasket typically is fabricated of a plastics, e.g. fluorinated polymer, and includes layers of asbestos or corrugated stainless steel. The sections are placed together and the gasket compressed by means of clamps positioned around the outside circumference of the flanges. The objective is to obtain a leak-proof joint between the column sections.

The column sections may be assembled at the place of manufacture, or may be shipped in sections to the point of use and assembled in situ. Two methods are typically used. In one, the column is assembled on the ground, that is horizontally, and subsequently the assembled column raised to a vertical position. In the other method, the column sections are stacked, one by one, vertically until the column is complete.

When the horizontal assembly method is utilised, the final raising of the column places severe pressure and strain on the gasketed joints because the lifting, even carefully done, causes bending along the column length. As a result, the gaskets frequently become overloaded and present a leakage problem. Overloading is caused by the gasket being temporarily compressed so much that it loses its resiliency. When the overload is removed the gasket fails to take up the space at the junction of the column sections and results in leakage. This situation can be especially aggravating after pressure testing on the ground has shown no leakage.

When the column sections are stacked, the weight of each section bears upon the section or sections below. As the column height increases, the joint loading increases. If the column contains trays or is packed, the gasket loadings further increase. Typically, the weight of the column increases about in ratio of the square of the diameter.

In tall columns, other factors may contribute to overloading of the gasketed joints, for example, wind or sway that may cause the column to rock, or guy wires or cables that may be unintentionally over-tightened.

The present invention provides a method and apparatus for sharing a load between individual sections of a vertical column. Although particularly useful in conjunction with glass lined steel columns, the present load distribution means is also useful in other vertical columns with linings which are assembled in sections and have gasketed joints. The load sharing, or distribution, means comprises a radially extending annular member, rigidly secured along the outer periphery of each column section to be jointed. The annular member is positioned adjacent to the section end. Generally, each column section has flanged ends, and a load sharing annular member is positioned adjacent each flanged end. The annular members are aligned as the column sections are assembled and are spacedly secured one from another. Thus, the annular member on one section is secured, but at a distance, from the annular member on an adjacent section.

In a preferred embodiment, the annular member is extended and generally flared outward at the column section end to form a skirt, or bell flange. To facilitate ease of connection, the edge of the skirt is preferably equipped with an annular face plate, or ring bar. The face plates on each of the column sections are adapted to be spacedly secured a desired distance one from another. The angle at which the skirt is outwardly tapered, or flared, from the column section side is preferably less than about 60°. Usually angles greater than about 60° are not utilised because an undesired bending movement is generated along the junction of the skirt and the column side. The distance the skirt extends outward from the section end generally depends upon the column size and the flare of the skirt, however, distances of between about two and about six inches (0.05m—0.15m) are typically used. The annular face plate has openings adapted to receive spacing and fastening means, such as bolts or threaded rods therethrough. In use, the gasketed column sections are aligned and clamped to seal the joint. The openings in the annular face plates are aligned and a spacing and fastening means inserted therethrough. Suitably, the spacing and fastening means are threaded rods and nuts. In this arrangement, nuts are threaded on the rods and butted to the face of the bar rings closest to the section end, thus the annular face plates are maintained in spaced relations to each other. Nuts are then secured to the ends of the threaded rods extending through the annular face plates securing the face plates (and column sections) in a spaced relation to each other. This arrangement provides a means of alleviating superimposed pressure on the gasketed joints by distributing the weight load around the joints by the formation of a span over each junction and thereby distributing a substantial amount of the loading to the column body.

For a better understanding of the invention and to show how the same may be carried into effect, reference will now be made, by way of example, to the accompanying drawings, in which:—

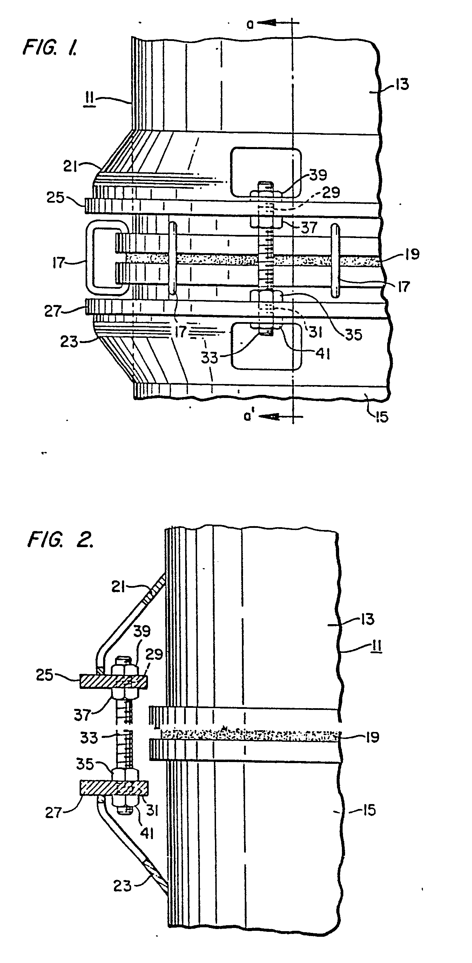

Figure 1 is a front elevational view of a portion of a column showing the present load sharing means bridging the junction of the two column sections, and

Figure 2 is a side elevational view, partly in section, taken along a and a' of Figure 1 of the load sharing means.

Referring to the drawing a column or tower generally indicated as 11 is comprised of a plurality of sections that are partially shown as 13 and 15. In a particularly useful embodiment, the sections are fabricated of steel, or other ferrous material, and are glass or enamel lined. The sections are joined together by a plurality of securing means such as "C" clamps 17. A gasket 19, suitably fabricated of an inert resilient material, is positioned in the innerface, or joint between the sections and is secured in place under pressure by clamps 17. Each of the sections has a load distribution member such as annular members 21 and 23 which angle outward from the wall of sections 13 and 15 and away from the end of each section.

Annular members or skirts 21 and 23 have annular face plates 25 and 27 attached at their bell ends. Annular face plates 25 and 27 have openings therein such as 29 and 31 to receive a plurality of fastening and spacing means positioned around the periphery of the face plate. Suitably, the fastening and spacing means are comprised of a threaded bar or rod such as 33 and nuts such as 35, 37, 39 and 41. The threaded rod 33 is inserted through the annular face plates 25 and 27. The inside nuts 35 and 37, that is, those closest to the section ends, are secured against the annular face plates 25 and 27. Thus, the plates 25 and 27 and in turn the sections 13 and 15 of the column are maintained in spaced relation. Nuts such as 39 and 41 are secured to the ends of the threaded rod 33 thereby maintaining the spaced relationship between the sections 13 and 15 of the column 11. It is also to be noted that the construction as shown allows visual inspection of the gasketed joint in the assembled column.

In operation, the sections such as 13 and 15 are assembled, the gasket 19 positioned and the clamps 17 tightened to obtain a leak-proof connection. The threaded rods such as 33 are then inserted through the annular face plates such as 25 and 27 and the inside nuts, such as 35 and 37, tightened or snugged to maintain a desired spacing. Subseqently, outside nuts such as 39 and 41 are secured. The result is a rigid column and one in which a substantial amount of the load, normally on the gasketed joints, is distributed directly to the sides of the column section.

## Claims

1. A load sharing means for distributing the load in a cylindrical vertical column (11) having a plurality of sections (13, 15) joined by a sealing gasket (19) between said sections comprising:—

a pair of radially extending annular flared members (21, 23), each said flared member having a radially inner edge surface rigidly attachable along the outer periphery of each section to be joined, adjacent each section end, each said flared member also having an outer edge surface being angled outwardly towards the respective section end at an angle of up to about 60° and spaced therefrom; and

a plurality of fastening and spacing means (33, 35, 37, 39, 41) positioned around the periphery of said annular members to rigidly secure and maintain one annular member on an end of one column section in spaced relation to the other annular member on the end of an adjacent section.

2. A load sharing means according to Claim 1, characterised in that the means rigidly to secure and maintain the spaced relation is a threaded connection.

3. A load sharing means according to Claim 2, characterised in that the threaded connection is a threaded rod and nuts (33, 35, 37, 39, 41).

4. A load sharing means according to Claim 1, 2 or 3, characterised in that the annular members extend from about 0.05m to about 0.15m from the bottom portion of each section.

5. A load sharing means according to any one of the preceding claims, characterised in that the annular members have annular face plates (25, 27) positioned on their outer edges.

6. A load sharing means according to Claim 6, characterised in that the means to rigidly secure and maintain a spaced relation is secured to said annular face plate.

7. A method of distributing the load between sections of a vertical column using the load sharing means of any one of the preceding claims comprising the steps of:

rigidly securing the inner edge surface of the radially extending annular members adjacent to the end of each column section to be joined;

aligning said column sections and securing said sections in leak-proof relation to each other; and

rigidly securing said annular members on adjacent sections in a spaced relation thereby maintaining a secure, spaced relation between sections.

8. A method according to Claim 8, characterised in that the spaced relation between sections is maintained by adjusting a threaded connection.

## Patentansprüche

1. Lastverteilungseinrichtung zum Verteilen der Belastung in einer zylindrischen, vertikalen Kolonne (11), die eine Mehrzahl von Abschnitten (13, 15) hat, welche durch eine Dichtung (19) zwischen den Abschnitten verbunden sind, mit:

einem Paar von sich in radialer Richtung erstreckenden ringförmigen konisch erweiterten Teilen (21, 23), wobei jedes konisch erweiterte Teil eine radial innen liegende Oberfläche hat, die fest entlang des äußeren Umfangs jedes Abschnittes, der angeschlossen werden soll, in der Nähe des Endes jedes Abschnittes anbringbar is, wobei jedes konisch erweiterte Teil außerdem eine äußere Randfläche hat, die nach außen in Richtung des Endes des entsprechenden Abschnittes konisch erweitert ist um einen Winkel von bis zu 60° und von desem beabstandet ist, und

einer Mehrzahl von Befestigungs- und Abstandsmitteln (33, 35, 37, 39, 41), welche um den Umfang der ringförmigen Teile herum angeordnet sind, um ein ringförmiges Teil an einem Ende eines Kolonnenabschnittes sicher zu befestigen und beabstandet zu dem anderen ringförmigen Teil am Ende eines anschließenden Abschnittes zu halten.

2. Lastverteilungseinrichtung nach Anspruch 1, dadurch gekennzeichent, daß die Einrichtung zum sicheren Befestigen und zum Halten des Abstandes eine Schraubverbindung ist.

3. Lastverteilungseinrichtung nach Anspruch 2, dadurch gekennzeichnet, daß die Schraubverbindung aus einer Geweindestange und Muttern (33, 35, 37, 39, 41) besteht.

4. Lastverteilungseinrichtung nach Anspruch 1, 2 oder 3, dadurch gekennzeichnet, daß die ringförmigen Teile sich vom Grundteil jedes Abschnittes um etwa 0,05m bis etwa, 0,15m erstrecken.

5. Lastverteilungseinrichtung nach einem der vorstehenden Ansprüche dadurch gekennzeichnet, daß die ringförmigen Teile ringförmige Stirnplatten (25, 27) haben, welche an ihren äußeren Rändern angeordnet sind.

6. Lastverteilungseinrichtung nach Anspruch 6, dadurch gekennzeichnet, daß die Einrichtung zum sicheren Befestigen und Aufrechterhalten der Abstandsbeziehung an der ringförmigen Stirnplatte befestigt ist.

7. Verfahren zum Verteilen der Belastung zwischen Abschnitten einer vertikalen Kolonne unter Verwendung der Lastverteilungseinrichtung nach einem der vorstehenden Ansprüche mit den folgenden Schritten:

festes Anbringen der inneren Randfläche der sich in radialer Richtung erstreckenden ringförmigen Teile in der Nähe des Endes jedes Kolonnenabschnittes, der angeschlossen werden soll,

Ausrichten der Kolonnenabschnitte und leckdichtes Befestigen der Abschnitte aneinander und

sicheres Befestigen der ringförmigen Teil an benachbarten Abschnitten im Abstand zueinander und damit Aufrechterhalten eines sicheren Abstandsverhältnisses zwischen den Abschnitten.

8. Verfahren nach Anspruch 7, dadurch gekennzeichnet, daß die Abstandsbeziehung zwischen den Abschnitten durch Einstellen einer Schraubverbindung aufrechterhalten wird.

**Revendications**

1. Dispositif de répartition de charge, destiné à distribuer la charge dans une colonne verticale cylindrique (11) ayant plusieurs tronçons (13, 15) raccordés par une garniture d'étanchéité (19) placée entre les tronçons comprenant:

deux organes annulaires disposés radialement et évasés (21, 23), chaque organe évasé ayant une surface radialement interne de bord destinée à être fixée rigidement à la périphérie de chaque tronçon raccordé, près de l'extrémité de chaque tronçon chaque organe évasé ayant aussi une surface de bord externe qui est inclinée vers l'extérieur vers l'extrémité du tronçon respectif, avec un angle pouvant atteindre 60° et étant placé à distance de cette extrémité, et

plusieurs dispositifs de fixation et d'entretoise (33, 35, 37, 39, 41) placés autour de la périphérie des organes annulaires et destinés à fixer rigidement et maintenir un premier organe annulaire à une extrémité d'un premier tronçon de colonne à distance de l'autre organe annulaire de l'extrémité d'un tronçon adjacent.

2. Dispositif de répartition de charge selon la revendication, 1, caractérisé en ce que le dispositif destiné à fixer rigidement et maintenir l'espacement est un raccord vissé.

3. Dispositif de répartition de charge selon la revendication 2, caractérisé en ce que le raccord vissé est formé par une tige filetée et des écrous (33, 35, 39, 41).

4. Dispositif de répartition de charge selon la revendication 1, 2 ou 3, caractérisé en ce que les organes annulaires dépassent d'environ 0,05m à environ 0.15m de la partie inférieure de chaque tronçon.

5. Dispositif de répartition de charge selon l'une quelconque des revendications précédentes, caractérisé en ce que les organes annulaires ont des plaques annulaires d'appui (25, 27) disposées à leurs bords externes.

6. Dispositif de répartition de charge selon la revendication 5, caractérisé en ce que le dispositif de fixation rigide et de maintein d'espacement est fixé à la plaque annulaire d'appui.

7. Procédé de distribution de charge entre des tronçons d'une colonne verticale à l'aide d'un dispositif de répartition de charge selon l'une quelconque des revendications précédentes, comprenant les étapes suivantes:

la fixation rigide de la surface du bord interne des organes annulaires disposés radialement près de l'extrémité de chaque tronçon de colonne à raccorder,

l'alignement des tronçons de colonne et la fixation des tronçons les uns aux autres de manière qu'ils ne présentent pas de fuite, et

la fixation rigide des organes annulaires des tronçons adjacents avec un certain espacement afin que les tronçons soient maintenus en position relative fermement et à distance les uns des autres.

8. Procédé selon la revendication 7, caractérisé en ce que l'espacement des tronçons est maintenu par réglage d'un raccord vissé.

FIG. I.

FIG. 2.